# EUROPÄISCHE PATENTSCHRIFT

(11) **EP 0 839 253 B1**
(45) Veröffentlichungstag und Bekanntmachung des Hinweises auf die Patenterteilung: **16.12.1998**
(21) Anmeldenummer: 96907381.6
(22) Anmeldetag: 07.03.1996
(51) Int. Cl.: E06B 3/67

(54) **TRANSPARENTES BAUELEMENT, ENTHALTEND MINDESTENS EINE FASERVERSTÄRKTE AEROGELPLATTE UND/ODER -MATTE**
TRANSPARENT COMPONENT CONTAINING AT LEAST ONE FIBRE-REINFORCED AEROGEL PLATE AND/OR MAT
COMPOSANT TRANSPARENT CONTENANT AU MOINS UNE PLAQUE ET/OU UN MAT D'AEROGEL RENFORCES FIBRES

(30) Priorität: 07.03.1995 DE 19507732
(43) Veröffentlichungstag der Anmeldung: 06.05.1998
(73) Patentinhaber: HOECHST AKTIENGESELLSCHAFT, 65929 Frankfurt am Main (DE)
(72) Erfinder: FRANK, Dierk, D-65719 Hofheim (DE); ZIMMERMANN, Andreas, D-64347 Griesheim (DE)
(74) Vertreter: Luderschmidt, Schüler & Partner GbR
(86) Internationale Anmeldenummer: EP9600977
(87) Internationale Veröffentlichungsnummer: WO9627726

(56) Entgegenhaltungen:
- EP-A- 0 018 955
- DE-A- 3 533 805
- DE-A- 4 106 192
- DE-C- 3 844 003
- US-A- 5 027 574

## Beschreibung

Die Erfindung betrifft transparente Bauelemente, insbesondere Isolierscheiben, die mindestens eine faserverstärkte Aerogelplatte und/oder -matte enthalten, sowie deren Verwendung.

Bislang bestehen Isolierscheiben aus 2 oder 3 Glasscheiben, die im Abstand von typischerweise 10 bis 30 mm parallel angeordnet sind und an den Kanten mit einem luftundurchlässigen Material fest miteinander verbunden sind. Zwischen den Scheiben befindet sich meist Luft oder ein anderes inertes Gas geringer Wärmeleitfähigkeit bei normalem oder leicht reduziertem Druck. Der isolierende Effekt dieser Isolierfenster beruht auf der Isolationswirkung des ruhenden Gases.
Es wurden mehrere Verfahren vorgeschlagen, die Isolationswirkung von lsolierglasscheiben durch die Verwendung von Aerogelen zu erhöhen.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinn, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes weitestgehend entfernt wird. Wird die Flüssigkeit des Gels dagegen unterkritisch, beispielsweise unter Bildung einer Flüssig-Dampf-Grenzphase entfernt, dann bezeichnet man das entstandene Gel vielfach auch als Xerogel.

Bei der Verwendung des Begriffs Aerogele in der vorliegenden Anmeldung handelt es sich um Aerogele im weiteren Sinn, d.h. im Sinn von "Gel mit Luft als Dispersionsmittel".
Aerogele, insbesondere solche mit Porositäten über 60 % und Dichten unter 0,4 g/cm³, weisen aufgrund ihrer sehr geringen Dichte, hohen Porosität und geringen Porendurchmesser eine äußerst geringe thermische Leitfähigkeit auf und finden deshalb Anwendung als Wärmeisolationsmaterialien, wie z.B. in der EP-A-0 171 722 beschrieben.

Die hohe Porosität führt aber auch zu geringer mechanischer Stabilität sowohl des Gels, aus dem das Aerogel getrocknet wird, als auch des getrockneten Aerogels selbst.

Zur Verbesserung der Isolationswirkung wurde z.B. vorgeschlagen, Aerogelmonolithe zwischen Glasscheiben zu bringen, um die Isolationswirkung durch die geringe Wärmeleitfähigkeit des Aerogels zu verbessern (CA-C-1 288 313, EP-A-018 955) und/oder die Schallschwächung solcher Scheiben zu verbessern (DE-A-41 06 192). Dabei sollen die Aerogelmonolithe z.T. fest mit den Glasplatten verbunden werden, wie z.B. in der DE-A-41 06 192 beschrieben.

Mit einem solchen Verfahren lassen sich zwar praktisch glasklare, transparente Scheiben erzielen, doch ist wegen der geringen mechanischen Stabilität der Aerogele zum einen der Aufwand zur Herstellung entsprechend großer Aerogelmonolithe zu hoch, zum anderen ist die Handhabung bei der Herstellung der Scheiben zu kompliziert, um solche Glasscheiben in größerem Umfang einsetzen zu können.

Weiter wurde vorgeschlagen, den Zwischenraum stattdessen mit einfacher herzustellendem und auch einfacher handzuhabendem Aerogelgranulat zu füllen. Die Scheiben sind dann jedoch nicht mehr ganz glasklar, sondern eher transluzent, vergleichbar mit Milchglasscheiben oder strukturierten Glasscheiben. Dies stellt keine wesentliche Einschränkung dar, da es eine Reihe von Anwendungen gibt, bei denen Schlagschatten durch direkten Lichteinfall vermieden werden sollen, z.B. Fenster in Werks-, Lager-, Messe- oder Museumshallen. Einen weiteren Anwendungsbereich könnten Oberlichter darstellen.

Derartige Fenster weisen jedoch einige Nachteile auf. So führt die Verdichtung des Granulates im Laufe der Zeit zu einer Änderung des Füllstandes in dem Fenster, was unerwünscht ist. Die Verdichtung kann z.B. als Folge dauernder kleiner Erschütterungen oder durch Zerstörung von Aerogelkügelchen, insbesondere bei Evakuierung erfolgen.
In dem Granulat werden Kräfte zwischen Granulatkügelchen untereinander und/oder zwischen Glasscheibe und Granulatkügelchen nur über sehr kleine Berührungsflächen übertragen. Dadurch treten relativ hohe Druck- und/oder Scherspannungen auf, die zur Zerstörung von Aerogelkörnern führen können (vgl. DE-A-35 33 805).
Daher wurde in der DE-A-35 33 805 vorgeschlagen, das Aerogelgranulat zwischen zwei Folien zwischen die Glasscheiben zu bringen und den Raum zwischen den Folien zu evakuieren. Durch die Flexibilität der Folie kann die Oberfläche zwischen Folie und Oberfläche der Kügelchen vergrößert werden, was zu einer Verbesserung der Langzeitstabilität führt.

Dieses Verfahren bringt jedoch einen relativ hohen Aufwand mit sich, da der Aufbau der Scheiben sehr kompliziert wird. Daneben reduzieren die zusätzlichen Folienschichten die Transparenz weiter.

In der US-A-5,027,574 werden Strukturen zur thermischen Isolation beschrieben, die aus zwei miteinander gasdicht verbundenen Scheiben bestehen, die einen gasdicht abgeschlossenen Zwischenraum bilden. Dieser Zwischenraum ist bei Drücken zwischen etwa 100-200 Torr und etwa 10⁻³ - 10⁻⁴ Torr mit einem Gas gefüllt, das bei diesem Druck eine wesentlich geringere Wärmeleitfähigkeit aufweist als Luft, deren Druck so niedrig ist, daß Wärmetransport durch Konvektion stark unterdrückt ist. Der Druck des Gases ist dabei gerade so niedrig, daß Wärmeübertragung durch Konvektion wesentlich reduziert wird, nicht aber die durch Wärmeleitung. In einer Ausführungsform kann der Zwischenraum auch mit Aerogelmaterial gefüllt sein. Auch in dieser Ausführungsform treten je nach dem, ob monolithisches oder granulares Aerogelmaterial verwendet wird, die oben beschriebenen Probleme auf.

In der EP-A-0 468 124 wird ein Verfahren zur Herstellung von transparenten Panels beschrieben, die mit Aerogelgranulat mit Korndurchmessern typischerweise zwischen 0,5 und 7 mm Durchmesser gefüllt sind. Um eine hohe Granulatdichte beim Befüllen des Zwischenraumes zwischen den Scheiben zu erreichen, wird die ganze Anordnung mit Frequenzen von typischerweise 30 - 100 Hz gerüttelt. Zur Verhinderung von Kondensation des im Aerogel noch enthaltenen Wassers wird weiter die gefüllte Glasscheibe unter Unterdruck unter 400 mbar, vorzugsweise unter 20 mbar, für 20 Minuten bis 2 Stunden auf Temperaturen zwischen 50 und 70°C erhitzt, so daß der Wassergehalt des Restgases und damit eine mögliche spätere Kondensation an der Scheibe entsprechend reduziert wird. Das Zusammensacken der Schüttung wird der Anmeldung zufolge dadurch vermieden, daß die Scheiben infolge des Unterdrucks das Granulat zusammendrücken, das dadurch immobil werde.

Das verwendete Verfahren ist durch die Notwendigkeit des Rüttelns und des Aufheizens unter Vakuum vergleichsweise aufwendig. Weiterhin ist nicht klar, ob im Laufe der Zeit nicht doch Granulatkörner durch Vibrationen zerstört werden können und die Füllung dann Zusammensacken kann.

Es bestand daher die Aufgabe transparente Bauelemente mit hoher Wärmedämmung zu finden, die einfach herzustellen sind und deren Füllung langzeitstabil ist.
Eine weitere Aufgabe bestand darin, entsprechende Bauelemente zur Schallisolation zu finden.

Die Aufgabe wird gelöst durch ein transparentes Bauelement mit mindestens zwei parallel angeordneten Scheiben aus transparentem Material, die einen Zwischenraum aufweisen, das dadurch gekennzeichnet ist, daß der Zwischenraum mindestens eine faserverstärkte Aerogelplatte und/oder -matte enthält, wobei das Aerogel hydrophobe Oberflächengruppen aufweist. Hydrophobe Aerogele bzw. Xerogele, wie z.B. in P 44 30 642.3 und P 44 30 669.5 beschrieben, werden verwendet.

Zum einen enthält ein hydrophobisiertes Aerogel wesentlich weniger Wasser als gewöhnliche Aerogele, zum anderen weist eine Aerogelmatte oder -platte keine Hohlräume wie ein Granulat auf, die Luft mit einer gegenbenen Feuchte enthalten könnten.

Hierdurch wird das Entstehen von Kondensation erheblich reduziert. Eventuell noch auftretende Feuchtigkeit kann ggfs. durch Verwendung üblicher Trocknungsmittel im Zwischenraum oder an der mechanischen Verbindung adsorbiert werden.

Vorzugsweise wird der Zwischenraum zwischen den Scheiben entlang der Kanten der Scheiben mit einem gasdichten Abschluß abgeschlossen. Der gasdichte Abschluß kann dabei gleichzeitig der mechanischen Verbindung und/oder Fixierung der Scheiben dienen. Der Abstand zwischen den mindestens zwei parallel angeordneten Scheiben liegt vorzugsweise im Bereich von 0,1 bis 5 cm, besonders bevorzugt im Bereich von 0,1 bis 2 cm. Das faserverstärkte Aerogel ist in nassem wie auch getrocknetem Zustand mechanisch wesentlich stabiler als reines Aerogel, insbesondere Aerogelmonolithe, und daher leichter handhabbar.
Wegen der großen Auflagefläche zwischen Scheibe und Aerogel einerseits, und dem Fehlen von Berührungspunkten andererseits werden die Kräfte, insbesondere auch bei Evakuierung, gleichmäßig verteilt, so daß kein Aerogel zerstört wird. Weiterhin sind die auftretenden Kräfte praktisch reine Druckkräfte, denen gegenüber Aerogele recht stabil sind, während in Granulaten zwangsläufig Scherkräfte auftreten, die bei den gegen Scherkräften sehr empfindlichen Aerogelen leicht zur Zerstörung einzelner Körner führen. Weiter werden zur Herstellung keine zusätzlichen Schritte wie die Verwendung von Folien benötigt.

Weiterhin kann eine Aerogelplatte oder -matte nicht in sich zusammensacken, so daß insgesamt eine langfristig stabile Füllung entsteht.
Desweiteren kann der Volumenanteil von Aerogel deutlich höher sein als bei einer Schüttung von Granulat, was zu einer erhöhten Isolierwirkung bei gleicher Dicke und gleichem Vakuum führt.

Als Scheiben kommen sowohl Glasscheiben als auch Verbundglasscheiben oder transparente oder nur schwach opake Kunststoffscheiben, z.B. solche aus glasklarem Polystyrol und seinen Copolymerisaten, aus PVC,
Polymethacrylaten, Polycarbonat, Polyethylenterephthalat, Polyurethanen, Polyolefinen oder Polyamiden, in Frage. Die Dicke der Scheiben ist dabei nicht beschränkt. Generell können die Scheiben auch sehr dick sein, um große mechanische Belastungen aufnehmen zu können, wie z. B. bei Glasbausteinen. Vorzugsweise liegt die Dicke der Scheiben jedoch im Bereich von 0,5 mm bis 3 cm.

Die Scheiben können weiterhin auf den dem Zwischenraum abgewandten Seiten strukturiert sein. Insbesondere kann die äußere Platte eine sägezahnartige Strukturierung mit waagerecht verlaufenden Schuppen aufweisen, die so geneigt sind, daß die Transmission von Sonnenlicht bei einem hohen Stand der Sonne (insbesondere im Sommer) deutlich geringer ist als die bei niedrigerem Stand (insbesondere im Winter). Möglich ist dabei, daß sich die Scheiben im Material in der Dicke und/oder in der Strukturierung unterscheiden. Darüber hinaus kann mindestens eine der Scheiben zur besseren Isolierung oder zur Tönung z.B. mit Metallen und/oder anderen Stoffen beschichtet sein. Die Scheiben können durch die üblichen dem Fachmann bekannten Vorrichtungen einerseits mechanisch fest verbunden und auf gegebenem Abstand gehalten werden, andererseits kann der Zwischenraum hierdurch gasdicht abgeschlossen werden.

Für das erfindungsgemäße Bauelement ist es nur notwendig, daß die Scheiben überall annähernd konstanten Abstand haben, so daß neben planen auch gewölbte Strukturen, z. B. kuppel- oder tonnenförmige, möglich sind.

Die Füllung zwischen den Scheiben besteht aus faserverstärkten Aerogelmatten und/oder -platten,wobei die Aerogel-Matrix Dichten unter 0.6 g/cm³ und Porositäten über 60 % aufweist, wie z.B. in DE-C-38 44 003, WO 93/06044 oder P 44 30 642.3 und P 44 30 669.5 beschrieben. Vorzugsweise liegen die Dichten unter 0.5 g/cm³ und die Porositäten über 80 %.
Die Matrix kann dabei von organischen oder anorganischen Aerogelen bzw. von Aerogelen auf der Basis von organischen und anorganischen Materialien gebildet werden, bevorzugt sind jedoch SiO₂-haltige Aerogele, insbesondere SiO₂-Aerogele.
Vorzugsweise finden Aerogele mit Wärmeleitfähigkeiten unter 30 mW/m°K besonders bevorzugt unter 20 mW/m°K bei Normaldruck Verwendung.

Der Volumenanteil der Fasern in dem faserverstärkten Aerogel sollte zwischen 0,5 und 30 % liegen, vorzugsweise zwischen 0,5 und 15 %. Ein höherer Anteil an Fasern führt zwar zu erhöhter mechanischer Festigkeit aber ebenso zu höherer Wärmeleitfähigkeit und verminderter Transparenz.
Die Fasern können in dem Aerogel in Form von Vliesen oder Matten oder als einzelne Fasern ungeordnet oder parallel zur Fläche ausgerichtet, vorliegen, wobei ihre Länge vorzugsweise größer als 1 cm sein sollte.
Die Fasern sollten vorzugsweise einen Durchmesser zwischen 0,1 und 30 µm aufweisen.
Vorzugsweise sollten die Aerogelplatten oder -matten transparente Fasern, wie z.B. Glasfasern enthalten, um die Lichtdurchlässigkeit der Anordnung hoch zu halten.
Das faserverstärkte Aerogelmaterial ist in der Form von Platten (WO 93/06044, P 44 30 642.3) oder auch flexiblen Matten (P 44 30 669.5) eingesetzt werden.

Zur Erzielung besonderer optischer oder thermischer Eigenschaften kann das Aerogel, wie z.B. in der DE-C-38 44 003 oder P 44 30 642.3 beschrieben, zusätzlich noch photochrome Substanzen und/oder IR-Trübungsmittel enthalten.

Werden in dem Zwischenraum mehrere Platten oder Matten verwendet, um eine größere Dicke zu erzielen, können sie vor oder während des Einbringens zwischen die Scheiben gegebenenfalls zusätzlich mit Klebern oder Klebefolien verklebt werden.

Der Zwischenraum kann auf Drücke zwischen 5 und 750 mbar, vorzugsweise zwischen 10 und 200 mbar evakuiert werden, um die Wärmeleitfähigkeit des Aerogels und damit des gesamten Bauelementes weiter zu reduzieren. Außerdem ist es möglich, daß durch die Evakuierung die transparenten Scheiben zusammengedrückt werden und so die Aerogelplatten oder -matten einklemmen, was eine Verklebung überflüssig machen kann.
Durch die hohe Druckfestigkeit der Aerogelplatten und/oder -matten kann bei Evakuierung ein großer Teil des Druckes durch das Aerogel aufgefangen werden, so daß aus dieser Sicht die Scheiben entlastet werden und daher dünner gewählt werden können.

Alternativ kann der Zwischenraum auch mit einem schweren Gas wie z.B. Argon bei Normaldruck gefüllt sein, was zu einer Reduktion der Wärmeleitfähigkeit des Zwischenraums (relativ zur Füllung mit Luft) führt.

Die Aerogelplatte oder -matte kann auch zur Erzielung besonderer mechanischer oder akustischer Eigenschaften mit den Glasscheiben durch Kleber oder Klebefolien verbunden sein, in Analogie zum Verfahren das in der DE-A-41 06 192 offenbart ist.

Die Verbindung der Scheiben miteinander und ihre Fixierung zueinander kann mit den üblichen bei lsolierglasscheiben angewandten und dem Fachmann bekannten Mitteln geschehen.
Bei der Herstellung kann die Aerogelplatte oder -matte z.B. in dem Schritt, bei dem die Scheiben zusammengefügt werden, einfach zwischen die Scheiben eingelegt werden. Gegebenenfalls kann die Evakuierung mit den dem Fachmann bekannten Verfahren erfolgen.

Die im Aerogel vorhandenen Fasern und die, im Fall der Verwendung von Matten, vorhandenen Risse führen dazu, daß die Scheiben nicht glasklar sind, sondern eher transluzent wie z.B. Milch- oder Strukturglasscheiben. Die beschriebenen Scheiben eignen sich daher zur transparenten Wärme-und/oder Schalldämmung z.B. für Fenster in Werks-, Lager-, Messe- oder Museumshallen bzw. für Oberlichter oder Lichtkuppeln in Dächern.

## Patentansprüche

1. Transparentes Bauelement mit mindestens zwei parallel angeordneten Scheiben aus transparentem Material, die einen Zwischenraum aufweisen, dadurch gekennzeichnet, daß der Zwischenraum mindestens eine faserverstärkte Aerogelplatte und/oder -matte enthält, wobei das Aerogel hydrophobe Oberflächengruppen aufweist.

2. Transparentes Bauelement gemäß Anspruch 1, dadurch gekennzeichnet, daß der Zwischenraum zwischen den Scheiben entlang der Kanten der Scheiben mit einem gasdichten Abschluß abgeschlossen ist.

3. Transparentes Bauelement gemäß Anspruch 2, dadurch gekennzeichnet, daß der gasdichte Abschluß der mechanischen Verbindung und/oder Fixierung der Scheiben dient.

4. Transparentes Bauelement gemäß mindestens einem der Ansprüche 1 bis 3, dadurch gekennzeichnet, daß die Aerogel-Matrix Porositäten über 60 % und Dichten unter 0,6 g/cm³ aufweisen.

5. Transparentes Bauelement gemäß mindestens einem der Ansprüche 1 bis 4, dadurch gekennzeichnet, daß das Aerogel ein SiO₂-Aerogel ist.

6. Transparentes Bauelement gemäß mindestens einem der Ansprüche 1 bis 5, dadurch gekennzeichnet, daß das Aerogel Wärmeleitfähigkeiten unter 30 mW/m°K aufweist.

7. Transparentes Bauelement gemäß mindestens einem der Ansprüche 1 bis 6, dadurch gekennzeichnet, daß der Volumenanteil des Fasermaterials im faserverstärkten Aerogel im Bereich von 0,5 bis 30 % liegt.

8. Transparentes Bauelement gemäß Anspruch 7, dadurch gekennzeichnet, daß das Fasermaterial ein transparentes Fasermaterial ist.

9. Transparentes Bauelement gemäß Anspruch 7 oder 8, dadurch gekennzeichnet, daß das Fasermaterial im wesentlichen Glasfasern enthält.

10. Transparentes Bauelement gemäß Anspruch 1, dadurch gekennzeichnet, daß der Zwischenraum zwischen den mindestens zwei Scheiben, der mit mindestens einem faserverstärkten Aerogel gefüllt ist, auf Drücke im Bereich von 5 bis 750 mbar evakuiert ist.

11. Verwendung von transparenten Bauelementen gemäß mindestens einem der vorhergehenden Ansprüche zur Wärme- und/oder Schalldämmung.

## Claims

1. A transparent component having at least two parallel panes of transparent material enclosing a space, wherein the space contains at least one fiber-reinforced aerogel sheet and/or mat, the aerogel having hydrophobic surface groups.

2. A transparent component as claimed in claim 1, wherein the space between the panes is sealed along the edges of the panes with a gastight seal.

3. A transparent component as claimed in claim 2, wherein the gastight seal serves for mechanical bonding and/or fixing of the panes.

4. A transparent component as claimed in at least one of claims 1 to 3, wherein the aerogel matrices have porosities of greater than 60% and densities of less than 0.6 g/cm³.

5. A transparent component as claimed in at least one of claims 1 to 4, wherein the aerogel is an SiO_{z} aerogel.

6. A transparent component as claimed in at least one of claims 1 to 5, wherein the aerogel has thermal conductivities of less than 30 mW/m°K.

7. A transparent component as claimed in at least one of claims 1 to 6, wherein the volume proportion of the fiber material in the fiber-reinforced aerogel is in the range from 0.5 to 30%.

8. A transparent component as claimed in claim 7, wherein the fiber material is a transparent fiber material.

9. A transparent component as claimed in claim 7 or 8, wherein the fiber material comprises essentially glass fibers.

10. A transparent component as claimed in claim 1, wherein the space between the at least two panes, which is filled with at least one fiber-reinforced aerogel, is evacuated to pressures in the range from 5 to 750 mbar.

11. The use of transparent components as claimed in at least one of the preceding claims for thermal and/or sound insulation.

## Revendications

1. Elément de construction transparent comprenant au moins deux plaques en matière transparente qui sont agencées parallèlement et qui présentent un espace intermédiaire, caractérisé en ce que l'espace intermédiaire contient au moins une plaque et/ou mat d'aérogel renforcé par des fibres, l'aérogel présentant des groupes superficiels hydrophobes.

2. Elément de construction transparent suivant la revendication 1, caractérisé en ce que l'espace intermédiaire entre les plaques est fermé le long des bords des plaques par une fermeture étanche aux gaz.

3. Elément de construction transparent suivant la revendication 1, caractérisé en ce que la fermeture étanche aux gaz sert à la liaison mécanique et/ou fixation des plaques.

4. Elément de construction transparent suivant au moins l'une des revendications 1 à 3, caractérisé en ce que la matrice d'aérogel présente des porosités supérieures à 60 % et des densités inférieures à 0,6 g/cm³.

5. Elément de construction transparent suivant au moins l'une des revendications 1 à 4, caractérisé en ce que l'aérogel est un aérogel à base de SiO₂.

6. Elément de construction transparent suivant au moins l'une des revendications 1 à 5, caractérisé en ce que l'aérogel présente des conductibilités thermiques inférieures à 30 mW/m°K.

7. Elément de construction transparent suivant au moins l'une des revendications 1 à 6, caractérisé en ce que la fraction volumique de la matière fibreuse dans l'aérogel renforcé par des fibres est de l'ordre de 0,5 à 30 %.

8. Elément de construction transparent suivant la revendication 7, caractérisé en ce que la matière fibreuse est une matière fibreuse transparente.

9. Elément de construction transparent suivant l'une des revendications 7 et 8, caractérisé en ce que la matière fibreuse contient essentiellement des fibres de verre

10. Elément de construction transparent suivant la revendication 1, caractérisé en ce que l'espace intermédiaire entre les au moins deux plaques, qui est rempli d'au moins un aérogel renforcé par des fibres, est soumis à un vide à des pressions de l'ordre de 5 à 750 mbar.

11. Utilisation d'éléments de construction transparents suivant au moins l'une des revendications précédentes pour l'isolation thermique et/ou acoustique.
